# EUROPÄISCHE PATENTSCHRIFT

(11) **EP 1 877 605 B1**
(45) Veröffentlichungstag und Bekanntmachung des Hinweises auf die Patenterteilung: **14.10.2009**
(21) Anmeldenummer: 06724604.1
(22) Anmeldetag: 27.04.2006
(51) Int. Cl.: D02G 3/44, D04B 1/14

(54) **VERFAHREN ZUR HERSTELLUNG TEXTILER FLÄCHEN MIT FUNKTIONSFÄDEN**
METHOD FOR PRODUCING TEXTILE FABRICS WITH FUNCTIONAL THREADS
PROCEDE DE PRODUCTION DE SURFACES TEXTILES A FILS FONCTIONNELS

(30) Priorität: 03.05.2005 AT 7642005; 27.07.2005 AT 12632005
(43) Veröffentlichungstag der Anmeldung: 16.01.2008
(73) Patentinhaber: EYBL International AG, 3500 Krems (AT)
(72) Erfinder: HERTWIG, Klaus, 87600 Kaufbeuren (DE); SCHALKO, Walter, A-3571 Gars Am Kamp (AT)
(74) Vertreter: Puchberger, Peter
(86) Internationale Anmeldenummer: PCT/EP2006/003912
(87) Internationale Veröffentlichungsnummer: WO 2006/117126

(56) Entgegenhaltungen:
- EP-A- 0 532 468
- EP-A- 1 631 122
- WO-A-03/021312
- DE-A1- 10 320 650
- DE-A1- 10 342 285
- FR-A- 2 859 737
- US-A- 5 484 983

## Beschreibung

Die Erfindung betrifft ein Verfahren zur Herstellung textiler Flächen und textile Flächen, die nach diesem Verfahren hergestellt sind. Weiters betrifft die Erfindung einen Leuchtkörper unter Verwendung derartiger textiler Flächen.

Insbesondere betrifft die Erfindung eine dehnfähige textile Fläche in Form eines Gewebes oder einer Maschenware. Bevorzugt sind die in dem Gewebe oder der Maschenware eingelegten Funktionsfäden Elektro-Lumineszenz-(EL)-Fäden, Organische-Lichtemittierende-Dioden-(OLED)-Fäden oder Polymere-Lichtemittierende-Dioden(PLED)-Fäden, nachfolgend Leuchtfäden genannt.

Leuchtende Textilien sind seit langern bekannt. Stand der Technik ist, dass Lichtwellenleiter-Filamente aus Kunststoff in die textile Fläche eingebracht, vorzugsweise eingewebt, werden. Gewebe mit optischen Glasfasern als Lichtwellenleiter werden wegen der extremen Empfindlichkeit bei der Verarbeitung nicht eingesetzt. Bekannt sind Gewebe mit PMMA - Lichtwellenleiter, deren Nachteile in der Fehlerhäufigkeit durch Strukturbrüche und hohe Empfindlichkeit gegen mechanische Beschädigung liegen. Die Ursache hierfür liegt in der konstruktiv und werkstoffbedingt geringen Dehnfähigkeit sowohl während der Herstellung als auch im Gebrauch. Derartige leuchtende Textilien mit Lichtwellenleitern sind zB aus der DE 3 430 716 A1. GB 2 305 848 A, WO 00/61991 oder der WO 02/12785 A1 bekannt.

Weiters bekannt sind Systeme, bei denen ein flächiges Element aus verschiedenen leitenden und phosphordotierten Schichten zu einer Lichtabstrahlung bei Anlegen definierter Wechselspannung angeregt wird (Leuchtkondensator; EL Folie). Diese Systeme werden qualitativ in flächiger Gleichmäßigkeit und Lebensdauer in Abhängigkeit von Betriebsspannung, -frequenz und Umgebungsbedingungen beurteilt. Der funktionale Schichtaufbau wird von einer hochleitfähigen, transparenten (ITO) Schicht abgeschlossen. Um ein vorzeitiges Altern der Funktionsschicht zu verhindern, ist diese ITO-Schicht besonders dicht auszuführen, oder die Anbringung einer Barrierefolie zur Abdichtung gegen Feuchtigkeit und Sauerstoff sowie Lösungsmitteln erforderlich. Diese ITO Schicht zeigt aber auf Grund ihrer Beschaffenheit eine besondere Unelastizität. Daraus resultiert, dass alle diese flächigen Produkte den Nachteil haben, kaum verformbar zu sein. Maximal kann über eine Linie aus der 2. Dimension mit begrenztem Radius geformt werden. Verformungen aus einer planen Fläche, die eine Verstreckung oder Stauchung in die dritte Dimension bedeuten, zB Kugelkalotte, führen zur Zerstörung der spröden ITO Schicht, die mit einem unmittelbaren oder später eintretenden Funktionsverlust einhergeht.

Im Patent DE 29 908 994 U1 wird die Ausstattung eines Autoinnenraumes beschrieben, indem die einzelnen Flächen mit in entsprechender Form vorgefertigten netzplanartigen Leuchtfollen besetzt werden. Hier sind ebenfalls die Verformungen nicht berücksichtigt und werden nur durch die Aufteilung der Gesamtflächen in mehrere Einzelteile als Netzplan annähernd erreicht.

DE 103 20 650 A1 beschreibt einen Faden mit mindestens einem Stromleiter zum betreiben eines lichterzeugenden Körpers, das eine auf den Faden aufgetragene Organische oder Polymere LED ist. Der Faden läßt sich für die unterschiedlichen Bedürfnisse und Ausführungen des Tuches herstellen und als Gewirke oder Gestricke zu einem Gewebe verarbeiten.

Alle oben angeführten Verfahren oder Konstruktionen weisen den Nachteil einer steifen, wenig dehnbaren Konstruktion auf. Dies macht z.B. den Einsatz eines Verkleidungstextils im automobilen Innenraum, wo eine dreidimensionale Verformbarkeit gefordert wird, unmöglich. Besonders Lichtwellenleiter sind für die Verwendung in verformbaren Geweben aufgrund ihrer geringen Biegsamkeit und erhöhten Bruchgefahr nicht geeignet.

DE 103 42 285 A1 beschreibt ein Verfahren zur Herstellung von textilen Flächen mit elektrischen Heizleitern. Das textile Material besteht aus einem Abstandsgewirke, wobei als in oder auf das Abstandsgewirke ein- oder aufgebrachte Heizleiter leitfähige oder mit einer leitfähigen Beschichtung versehene textile Garne verwendet werden.

Das erfindungsgemäße Verfahren ist dadurch gekennzeichnet, dass die Funktionsfäden beim Web-, Strick- oder Wirkvorgang in die textile Fläche als am Aufbau des Textils beteiligte Fäden eingearbeitet werden oder ohne Beteiligung am Aufbau des Textils in die textile Fläche eingelegt und von dieser gehalten werden.

Gemäß Erfindung wird für die Funktionsfäden eine textile Trägerstruktur in Form von Geweben oder Maschenware vorgesehen. Dies erfolgt in einer solchen Weise, dass die Flexibilität der textilen Fläche nicht oder nur unwesentlich beeinflusst wird. Dadurch wird erreicht, dass die textile Fläche im erforderlichen Ausmaß dreidimensional verformt werden kann, um z.B. dreidimensional gebogene Gegenstände überziehen zu können. Dabei soll das Textil bei Anordnung von Leuchtfäden als Funktionsfäden über die Gesamtfläche oder mustergemäß leuchten, wenn angeschlossene Stromquellen und gegebenenfalls Inverter die entsprechenden Funktionsfäden zum Leuchten bringen. Bevorzugt können als Funktionsfäden z.B. EL-Fäden, OLED-Fäden oder PLED-Fäden zum Einsatz kommen, wie sie in der US 5869 930 offenbart sind. Diese sind biegsam und flexibel genug um auch in ein Gewebe als Kett- und/oder Schussfaden eingewebt zu werden.

Derartige Leuchtfäden werden vorzugsweise in annähernd gestreckter Form so in die tragende Struktur eingebettet, sodass eine Verschiebung gegen die tragenden Fäden bei Verformung der Fläche ermöglicht wird. Dies kann im Fall eines Gewebes sowohl ein Schuss als auch Kettfaden, im Fall eines Gewirkes ein Schuss oder Stehfaden und im Fall eines Gestrickes eine Futterlegung oder Schussfaden sein.

Die textile Fläche ist in erster Linie dadurch gekennzeichnet, dass die Funktionsfäden in der Fläche beweglich oder verschiebbar eingebettet sind, und dass die textile Fläche mit den darin angeordneten Funktionsfäden dreidimensional verformbar ist, wobei die Funktionsfäden in der Fläche mustermäßig abschnittsweise abgedeckt oder frei sichtbar sind.

Für das Ausbilden der tragenden Textilflächen werden z.B. Kunststofffasern wie PET, PP oder PA verwendet.

In einer weiteren Ausführungsform einer erfindungsgemäßen textilen Fläche werden zweibettige Gestricke (RR/Doppeljersey) eingesetzt. Bei der Herstellung dieser textilen Flächen wird der Leuchtfaden zwischen den beiden Flächen während des Strickprozesses eingelegt. Die Mustergestaltung findet durch unterschiedliche Teilreihenbindung einer oder mehrerer vorhergehender Reihen sowie der nachfolgenden Reihen und/oder Umhängen in das andere Nadelbett statt, sodass an den mustermäßig gewünschten Stellen die EL-Schnüre oder OLED-Fäden nach einer oder beiden Seiten hin sichtbar werden. Dabei ist es vorteilhaft, wenn aus Gründen der mechanischen Beständigkeit die Funktionsfäden unter der Textiloberfläche gehalten werden.

Die erfindungsgemäßen textilen Flächen sollen insbesondere dazu verwendbar sein, im Automobilinnenraum auf einem Träger als Beleuchtungselement, bevorzugt für eine ambiente Ausleuchtung, Verwendung zu finden. Zufolge der guten Verformbarkeit solcher textiler Flächen können auch dreidimensionale Träger bespannt werden, wie z.B. Türflächen, Türinserts, Zierelemente wie Leisten aber auch Dachsäulen oder Dachhimmel von Fahrzeugen. Auch Ablagefächer, Taschen und Staufächer können so mit einer ambienten Ausleuchtung ausgestattet werden. Die erfindungsgemäße textile Konstruktion lässt eine leichte Verschiebung der Trägerstruktur in Achsrichtung des Funktionsfadens zu.

Die Kontaktierung der Leuchtfäden erfolgt seitlich am Textil in konfektionierter Form. Die aus dem Textil überstehenden EL Schnüre werden schichtweise abisoliert und je eine Kontaktschicht dann an jeweils gegenüberliegenden Seiten mit der Stromquelle oder dem Inverter verbunden. Dabei ist die Anzahl, Größe und Anordnung der verwendeten Leuchtfäden sowie die Stromquelle bzw. der Inverter willkürlich vom technischen Design des Textiles als auch des Bauteiles abhängig und kann entsprechend variiert werden.

Der erfindungsgemäße Leuchtkörper ist dadurch gekennzeichnet, dass er textile Flächen der beschriebenen Art sowie eine oder mehrere Stromquellen und/oder Inverter zum Betrieb der Funktionsfäden, sowie eine Schalt- oder Regelungsvorrichtung zur Speisung der Stromquellen aufweist.

Je nach dem gewähltem Durchmesser der Leuchtfäden und/oder deren Abstand zueinander sind diese als einzelne Fäden oder als leuchtende Fläche sichtbar. Aus wirtschaftlichen Gründen empfiehlt es sich, die Leuchtfäden in möglichst großem Abstand zu verlegen. Naturgemäß sind diese dann einzeln sichtbar. Durch den Einbau eines Diffusors ist trotzdem eine gleichmäßig leuchtende Fläche erreichbar. Dies wird an folgendem Ausführungsbeispiel erläutert:

Auf die Leuchtfläche wird eine Schicht aufgebracht, die primär die Funktion hat, einen gleichmäßigen Abstand zu den Leuchtfäden zu erzeugen. Vorzugsweise kann diese Abstandshalterschicht aus einer oder mehreren Schichten transparenten oder transluzentem verschäumten Kunststoffes oder einem dreidimensionalem Abstandstextil bestehen. Das Abstandstextil kann gewebt, gestrickt oder (kett-)gewirkt sein. Die Abstandsschicht weist bevorzugt eine Dicke von 2 bis 10 mm auf. Bei dünnerem Abstand sind die Leuchtfäden noch sichtbar, ein dickerer Abstand erfüllt die Funktion der gleichmäßigen Verteilung des Lichts gut, jedoch wird dann für viele Anwendungen die Bauhöhe zu hoch. Besteht die Abstandsschicht bereits aus einem Diffusor, was zum Beispiel bei Schaumstoffen der Fall ist, kann darauf direkt die Dekoroberfläche aufgebracht werden. Hat die Abstandsschicht keine Diffusoreigenschaften, was zum Beispiel bei 3D-Textilien mit geringer Dichte an Stehfäden der Fall ist, werden darauf noch eine oder mehrere lichtdurchlässige matte Diffusorschichten aufgebracht. Besonders geeignet hierfür sind dehnbare und/oder verformbare mattierte Folien auf Basis von Polymethylmethacrylat, Polycarbonat, Polyurethan, Polyethylen oder Polypropylen.

Eine Konstruktion bestehend aus einer Maschenware mit in einem Abstand von 8 mm parallel eingearbeiteten Leuchtfäden, einer Lage Abstandstextil auf Basis eines Kettgewirks und einer mattierten PU-Folie ergab eine gleichmäige Lichtabstrahlung.

Weitere Merkmale der Erfindung sind den Ansprüchen, der Beschreibung sowie den Zeichnungen zu entnehmen.

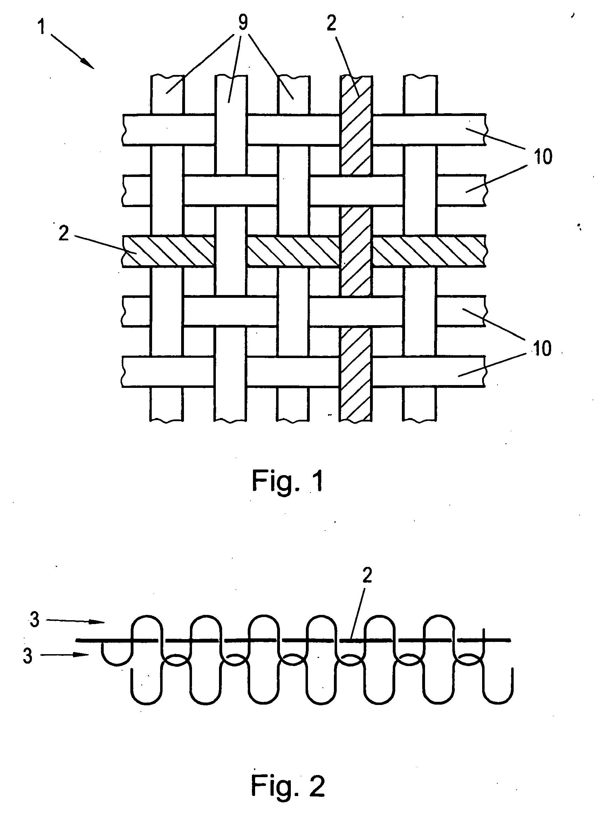

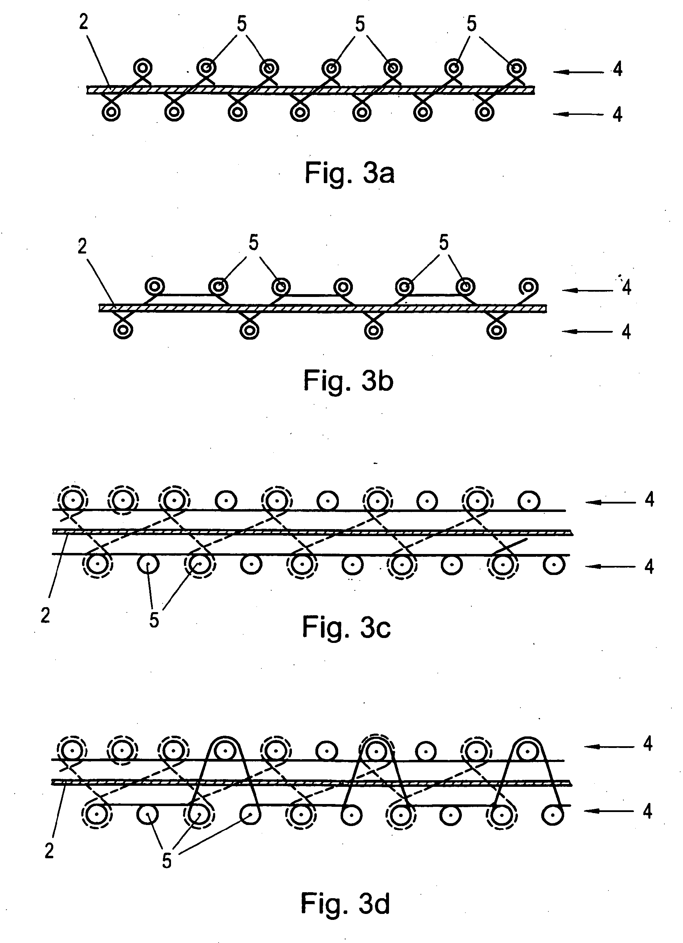

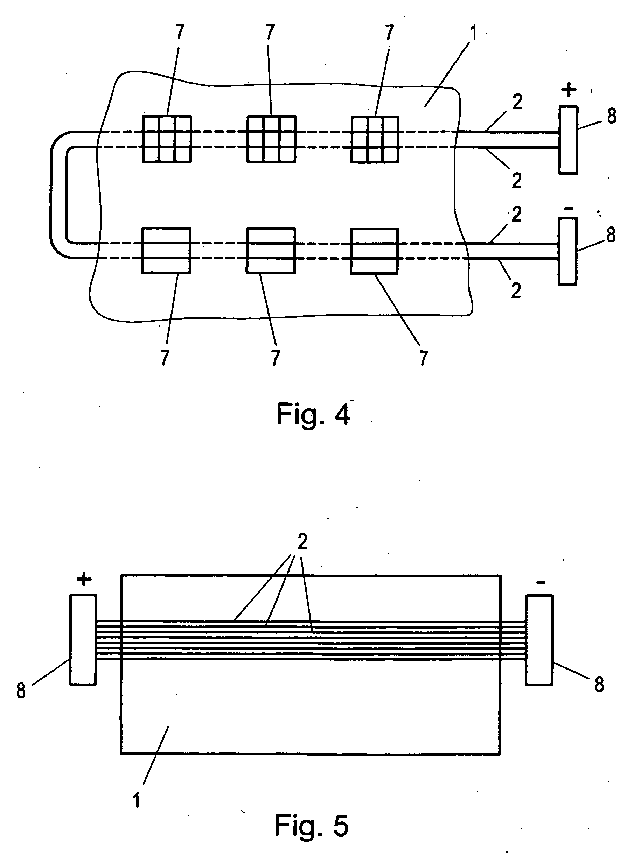

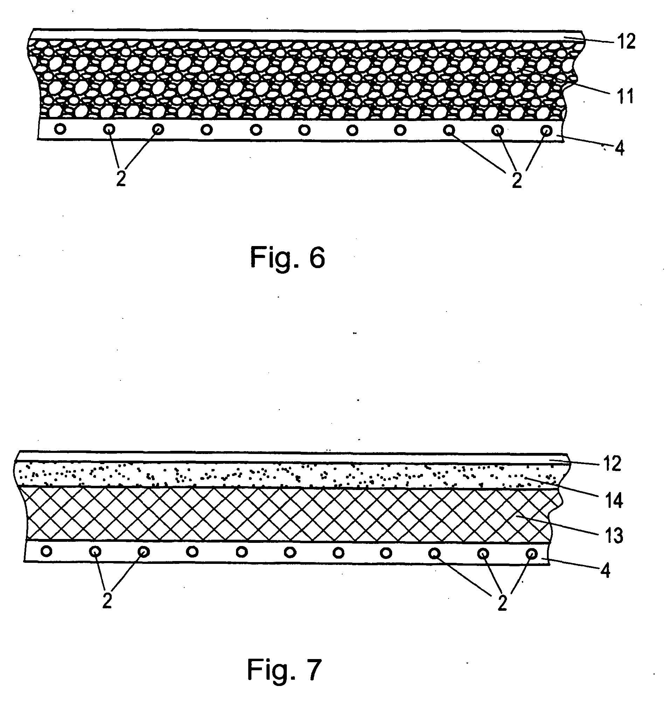

Fig. 1 zeigt eine Detailansicht eines Gewebes mit darin eingearbeiteten Funktionsfäden. Fig. 2 zeigt eine Detailansicht von Maschenreihen mit darin angeordnetem Funktionsfaden. Fig 3a zeigt einen Schnitt durch ein doppellagiges Gestrick oder Gewirk mit darin angeordnetem Funktionsfaden. Fig. 3b, 3c und 3d zeigen weitere Schnitte durch doppellagige Maschenware mit dazwischen angeordnetem Funktionsfaden, wobei zumindest in einer der beiden Lagen jeweils mustergemäß Maschen ausgelassen sind. Fig. 4 zeigt eine erfindungsgemäße textile Fläche in einer Aufsicht bei der einzelne Stellen mustergemäß derart ausgebildet sind, dass die Funktionsfäden sichtbar sind. Fig. 5 zeigt eine weitere schematische Ansicht einer erfindungsgemäßen textilen Fläche mit daran angeordneten Stromquellen oder Invertern. Fig. 6 zeigt eine schematische Schnittansicht mit einer kombinierten Abstands-Diffusorschicht aus Schaumstoff, und Fig. 7 mit einer Abstandshalterschicht aus 3D-Textil und einer separaten Diffusorschicht zur Vergleichmäßigung der Leuchtfläche.

Die Fig. 1 zeigt eine Detailansicht einer in einfachster Form gewebten textilen Fläche 1 mit darin angeordneten Funktionsfäden in Form von Leuchtfäden 2. Die Leuchtfäden 2 können sowohl als Kettfäden 9 oder als Schussfäden 10 in das Gewebe eingearbeitet sein. Im Gegensatz zu herkömmlichen Lichtleitern erlaubt die höhere Biegsamkeit und Flexibilität das Einweben derartiger Leuchtfäden, wobei die dreidimensionale Verformbarkeit der textilen Fläche 1 weitgehend erhalten bleibt.

In Fig. 2 sind ausschnittsweise zwei Maschenreihen 3 eines Gestricks im Detail dargestellt, wobei ein Funktionsfaden 2, in diesem Fall ein Leuchtfaden während des Strickens in die Maschenware eingearbeitet wurde.

Die Fig. 3a bis 3d zeigen jeweils einen Schnitt durch zwei Gestricklagen 4 eines doppellagigen Gestricks. Die maschenbildenden Fäden werden dabei jeweils um die Nadeln 5 geschlungen, die dann die nächste Maschenreihe in der textilen Fläche 1 bilden. Zwischen den beiden Gestricklagen wird der Leuchtfaden 2 eingelegt und durch Bildung der darauffolgenden doppellagigen Maschenreihe in der textilen Fläche umschlossen. Der Leuchtfaden 2 ist dadurch nicht direkt am Aufbau des Gestricks beteiligt, wodurch die mechanischen Belastungen die auf den Leuchtfaden einwirken weiter gesenkt werde. Der Leuchtfaden 2 bleibt bei dieser Ausführungsform in der fertigen textilen Fläche geringfügig hin- und herbewegbar, wodurch etwalgen Belastungen durch die dreidimensionale elastische Verformung des fertigen Gestricks weitgehend ausweichen kann. Wie in Fig. 3b und 3d zu sehen ist, kann der Funktionsfaden 2 durch Anordnen bestimmter Maschen in einer und/oder der anderen Gestricklage 4 derart angeordnet sein, dass er zumindest teilweise sichtbar ist. Im gezeigten Beispiel wird durch ausgelassene Maschen in der unteren Gestricklage 4 ein in diese Richtung sichtbares Muster gebildet.

In Fig. 4 ist eine beispielhafte textile Fläche 1 gezeigt, bei der Leuchtfäden 2 mustermäßig in die Fläche eingearbeitet wurden. In diesem Beispiel sind sechs quadratische Flächen derart gestrickt, dass durch Auslassungen bestimmter Maschen, wie in Fig. 3b und 3d gezeigt, Musterflächen 7 entstehen, wo die eingearbeiteten Leuchtfäden 2 sichtbar sind. Werden die Leuchtfäden 2 von der Stromquelle (nicht gezeigt) über die Inverter 8 angespeist, leuchten die entsprechend gestalteten Musterflächen 7 während die restliche textile Fläche 1 durch die dichtere Maschenbildung über den Leuchtfäden 2 gar nicht oder schwächer leuchtet.

Die Inverter oder Stromquellen 8 können z.B. wie in Fig. 4 gezeigt auf der gleichen Seite angeordnet sein, wobei die Leuchtfäden durch die textile Fläche jeweils wieder zum entsprechenden jeweiligen Inverter 8 zurückgeführt werden müssen, oder können an unterschiedlichen Seiten der textilen Fläche 1 angeordnet sein, z.B. an der gegenüberliegenden, wie dies bei den Invertern 8 der in Fig. 5 gezeigten textilen Fläche 1 der Fall ist. Prinzipiell müssen nur immer die entsprechenden Enden der Funktionsfäden 2 mit dem jeweiligen Inverter 8 verbunden werden, was bereits beim Herstellen der textilen Fläche 1 berücksichtigt werden muss. Die Inverter 8 können dementsprechend je nach Platzbedarf an beliebiger Stelle angeordnet sein.

Fig. 6 zeigt eine schematische Ansicht eines gleichmäßig leuchtenden Textilverbundes. In die Textillage 4, welche vorzugsweise als Maschenware ausgeführt wird, werden die Leuchtfäden 2 wie oben beschrieben eingearbeitet. Darüber wird eine Lage eines transparenten oder transluzenten verschäumten Kunststoffs 11 aufgebracht. Als besonders geeignet hat sich eine Dicke von 2 bis 10 mm erwiesen. Durch die Schaumporen wird das streifenförmig abgestrahlte Licht so gestreut, dass das Licht auf der Schaumoberfläche gleichförmig erscheint. Als oberste Lage wird das eigentliche Dekortextil 12 aufgebracht.

Eine andere Variante, zu einem gleichmäßig leuchtenden Textilverbund zu gelangen, zeigt Fig. 7: statt des geschäumten Kunststoffs wird ein dreidimensionales Abstandstextil 13 und darauf eine lichtdurchlässige matte Diffusorschicht 14 aufgebracht. Je nach gewünschtem Verfahren kann die Diffusorschicht aus einem thermoplastisch verformbaren Material oder aus einem Elastomer bestehen. Durch den definierten Abstand zu den Leuchtfäden sind diese auf der Diffusoroberfläche nicht mehr einzeln erkennbar. Ist eine gleichmäßig leuchtende Kunststoffoberfläche gewünscht, stellt die Diffusorschicht die oberste Lage dar, ist dagegen eine textile Oberfläche gewünscht, wird noch ein Dekortextil 12 aufgebracht.

## Patentansprüche

1. Verfahren zur Herstellung textiler Flächen mit darin angeordneten Funktionsfäden, wobei die Funktionsfäden (2) Elektro-Lumineszenz-(EL)-Schnüre, Organische-licht-emittierende-Dioden- (OLED)-Fäden oder Polymere-lichtemittierende-Dioden-(PLED)-Fäden sind, die das Licht zumindest abschnittsweise in radialer Richtung abstrahlen, **dadurch gekennzeichnet, dass** die Funktionsfäden (2) beim Web- oder Strickvorgang ohne Be- teiligung am Aufbau des Textils in die textile Fläche (1) eingelegt und von die- ser gehalten werden.

2. Verfahren nach Anspruch 1, **dadurch gekennzeichnet, dass** die textile Fläche (1) als Maschenware gebildet wird, wobei die Funktionsfäden (2) als Schussfaden oder Stehfaden in die Maschenware zwischen den Maschen eingelegt werden.

3. Verfahren nach Anspruch 1, **dadurch gekennzeichnet, dass** die textile Fläche als zweibettige Maschenware gestrickt wird, wobei die Funktionsfäden zwischen die beiden Strickflächen eingelegt werden.

4. Verfahren nach Anspruch 3, **dadurch gekennzeichnet, dass** die Funktionsfäden (2) durch umliegende Maschen, Henkel und Unterlegungen und Polstege der Maschenware im Textilverbund gehalten werden.

5. Textile Flächen hergestellt nach einem der Ansprüche 1 bis 4, **dadurch gekennzeichnet, dass** die Funktionsfäden (2) in der Fläche beweglich oder verschiebbar eingebettet sind, und dass die textile Fläche (1) mit den darin angeordneten Funktionsfäden (2) dreidimensional verformbar ist.

6. Textile Fläche nach Anspruch 5, **dadurch gekennzeichnet, dass** die Funktionsfäden (2) mustermäßig abschnittsweise durch Anordnung von mustermäßigen Abschnitten im Gewebe oder durch Anordnung von Masche, Henkel und/oder Unterlegung im Gestrick oder Gewirk frei sichtbar sind.

7. Textile Fläche nach Anspruch 5 oder 6, **dadurch gekennzeichnet, dass** die EL-Schnüre mit jeweils einem ihrer Enden an einen oder mehrere Inverter (8) angeschlossen sind.

8. Textile Fläche nach einem der Ansprüche 5 bis 7, **dadurch gekennzeichnet, dass** auf der, die Funktionsfäden (2) tragende Fläche (1), an der abstrahlenden Seite zumindest eine Diffusorschicht und gegebenenfalls ein Dekortextil (12) angeordnet ist.

9. Textile Fläche nach Anspruch 8, **dadurch gekennzeichnet, dass** zwischen Diffusorschicht (14) und der die Funktionsfäden (2) tragende Fläche (1) ein Abstandstextil (13) angeordnet ist oder die Diffusorschicht (14) durch ein Abstandstextil (13) gebildet ist.

10. Leuchtkörper, **dadurch gekennzeichnet, dass** er textile Flächen (1) gemäß einem der Ansprüche 5 bis 9, eine oder mehrere Stromquellen (6), Inverter (8) zum Betrieb der Funktionsfäden (2) sowie eine Schalt- und/oder Regelungsvorrichtung zur Speisung der Inverter (8) aufweist.

## Claims

1. Method of manufacturing textile surfaces with functional threads arranged therein, the functional threads (2) being electroluminescent (EL) filaments, organic light-emitting diode (OLED) threads or polymer light-emitting diode (PLED) threads which, at least in parts, radiate the light in radial direction, **characterized in that** the functional threads (2) are inserted into the textile surface (1) during the weaving or knitting process without involvement in the structure of the textile and are retained therein.

2. Method according to Claim 1, **characterized in that** the textile surface (1) is formed as a knitted fabric, the functional threads (2), in the form of weft threads or vertical threads, being inserted into the knitted fabric between the loops.

3. Method according to Claim 1, **characterized in that** the textile surface is knitted as a double-bed knitted fabric, the functional threads being inserted between the two knitted surfaces.

4. Method according to Claim 3, **characterized in that** the functional threads (2) are retained in the textile composite by surrounding stitches, loops and backings and pile webs of the knitted fabric.

5. Textile surfaces manufactured according to one of Claims 1 to 4, **characterized in that** the functional threads (2) are embedded in the surface in such a way as to be movable or displaceable, and **in that** the textile surface (1) with the functional threads (2) arranged therein can be three-dimensionally deformed.

6. Textile surface according to Claim 5, **characterized in that** in parts the functional threads (2) are clearly visible in the way of a pattern due to the arrangement of pattern-like sections in the woven fabric or the arrangement of stitches, loops and/or backing in the knitted fabric.

7. Textile surface according to Claim 5 or 6, **characterized in that** each EL filament is connected at one of its ends to one or more inverters (8).

8. Textile surface according to one of Claims 5 to 7, **characterized in that** on the surface (1) carrying the functional threads (2), at least one diffuser layer and possibly a decorative textile (12) is provided on the radiating side.

9. Textile surface according to Claim 8, **characterized in that** a spacer textile (13) is provided between diffuser layer (14) and the surface (1) carrying the functional threads (2), or the diffuser layer (14) is formed by a spacer textile (13).

10. Illuminant, **characterized in that** it comprises textile surfaces (1) according to one of Claims 5 to 9, one or more sources of current (6), inverters (8) for operating the functional threads (2) and a switching and/or regulating device for supplying the inverters (8).

## Revendications

1. Procédé de production de faces textiles avec des fils fonctionnels disposés dans celles-ci, où les fils fonctionnels (2) sont des cordons électroluminescents (EL), des fils organiques de diodes luminescentes (OLED) ou des fils en polymère de diodes luminescentes (PLED), qui font rayonner la lumière au moins par sections dans la direction radiale, **caractérisé en ce que** les fils fonctionnels (2), lors de l'opération de tissage ou de tricotage, sont placés sans contribuer à la formation du textile dans la face textile (1) et sont retenus par celle-ci.

2. Procédé selon la revendication 1, **caractérisé en ce que** la face textile (1) est formé comme tricot, où les fils fonctionnels (2) sont placés comme fils de trame ou fils fixes dans le tricot entre les mailles.

3. Procédé selon la revendication 1, **caractérisé en ce que** la face textile est tricotée comme tricot à deux lits, où les fils fonctionnels sont placés entre les deux faces de tricot.

4. Procédé selon la revendication 3, **caractérisé en ce que** les fils fonctionnels (2) sont retenus dans la combinaison textile par des mailles environnantes, bouclettes et flottés et âmes de poil du tricot.

5. Faces textiles produites selon l'une des revendications 1 à 4, **caractérisé en ce que** les fils fonctionnels (2) sont noyés dans la face d'une manière mobile ou déplaçable, et **en ce que** la face textile (1) avec les fils fonctionnels (2) disposés dans celle-ci est déformable tridimensionnellement.

6. Face textile selon la revendication 5, **caractérisée en ce que** les fils fonctionnels (2) sont librement visibles, selon le dessin, par sections, par l'agencement de sections correspondant aux dessins dans le tissu ou par l'agencement de la maille, bouclette et/ou flotté dans le tricot ou le tissu.

7. Face textile selon la revendication 5 ou 6, **caractérisée en ce que** les cordons EL sont reliés par respectivement une de leurs extrémités à un ou plusieurs inverseurs (8).

8. Face textile selon l'une des revendications 5 à 7, **caractérisée en ce qu'**il est disposé sur la face (1) portant les fils fonctionnels (2), au côté du rayonnement, au moins une couche de diffusion et le cas échéant un textile de décor (12).

9. Face textile selon la revendication 8, **caractérisée en ce qu'**il est disposé entre la couche de diffusion (14) et la face (1) portant les fils fonctionnels (2) un textile d'écartement (13) ou bien la couche de diffusion (14) est formée par un textile d'écartement (13).

10. Corps lumineux, **caractérisé en ce qu'**il présente des faces textiles (1) selon l'une des revendications 5 à 9, une ou plusieurs sources de courant (6), des inverseurs (8) pour le fonctionnement des fils fonctionnels (2) ainsi qu'un dispositif de commutation et/ou de régulation pour l'alimentation des inverseurs (8).
